# EUROPEAN PATENT APPLICATION

(11) **EP 4 768 320 A1**
(43) Date of publication of application: **01.07.2026**
(21) Application number: 25816171.0
(22) Date of filing: 11.04.2025
(51) Int. Cl.: B60L 58/10, B60L 1/00, H04L 12/12, H04L 12/10, H04L 12/40

(54) **POWER MANAGEMENT DEVICE, VEHICLE INCLUDING SAME, AND METHOD**

(30) Priority: 27.05.2024 KR 20240068693
(71) Applicant: LG ENERGY SOLUTION, LTD., Seoul 07335 (KR)
(72) Inventor: LEE, Ye Seul, Daejeon 34122 (KR); YANG, Seong Yeol, Daejeon 34122 (KR); JUNG, Jae Sang, Daejeon 34122 (KR)
(74) Representative: Plasseraud IP
(86) International application number: PCT/KR2025/004930
(87) International publication number: WO 2025/249757

(57) **Abstract**

According to an embodiment disclosed in this document, a power management device may include a first control unit electrically connected to a battery pack, at least one second control unit electrically connected to the first control unit, and an end device electrically connected to the first control unit and the at least one second control unit and configured to control the battery pack. The end device may be configured to receive power from the first control unit and receive a wake-up packet from the at least one second control unit.

## Description

### TECHNICAL FIELD

### Cross-reference to Related Applications

This application claims priority from Korean Patent Application No. 10-2024-0068693, filed on May 27, 2024, the disclosure of which is incorporated by reference herein.

### Technical Field

Embodiments disclosed in this document relate to a power management device and method.

### BACKGROUND ART

As electric vehicles powered by electricity become widespread, research and development on new vehicle architectures are actively being conducted. For example, the electric vehicle may be powered by secondary batteries. Here, secondary batteries are batteries that can be charged and discharged, and may be interpreted as including both conventional Ni/Cd batteries, Ni/MH batteries, and recent lithium ion batteries. Among secondary batteries, lithium ion batteries have the advantage of having much higher energy density than conventional Ni/Cd batteries and Ni/MH batteries, etc. In addition, lithium ion batteries may be manufactured to be small and lightweight, and thus lithium ion batteries are used as power sources for mobile devices. Recently, the scope of use of the lithium ion batteries has expanded to include a power source for electric vehicles, and the lithium ion batteries are attracting attention as a next-generation energy storage medium.

Such battery cells, battery modules, battery packs, or battery racks may be utilized in various devices. As an example, batteries may be utilized not only in mobile devices such as mobile phones, laptop computers, smart phones, and smart pads, but also in the fields of vehicles powered by electricity (EVs, HEVs, and PHEVs), large-capacity power storage devices (ESS), etc.

The state and operation of these batteries may be managed and controlled by a battery management system (BMS). The battery management system may be included together with the battery in a single apparatus.

Meanwhile, as the automobile industry changes, the concept of future mobility such as software defined vehicle (SDV) and purpose-built vehicle (PBV) is gradually becoming more concrete. For example, the SDV refers to a car that controls and manages hardware with software. Software according to the SDV can define not only the driving performance of the car, but also the convenience functions, safety functions, emotional quality of the car, and the brand's identity. By the architecture through the SDV, vehicle development costs can be reduced through the commonization of ECU and internalization of software. In addition, autonomous driving technology can be advanced through high-performance computers and networks based on an electronic architecture.

### DISCLOSURE OF THE INVENTION

### TECHNICAL PROBLEM

It may be important that power management is performed efficiently under the structure of SDV. In order to supply power from the battery pack to other components (e.g., zone controller, end device, etc.), an efficient and adaptive process needs to be developed.

Embodiments disclosed in this document provide a power management device and method excellent from the perspective of power control and power efficiency by implementing signal transmission and reception subjects between components under the SDV structure separately. And a vehicle including the power management device.

The technical problems of the embodiments disclosed in this document are not limited to the technical problems mentioned above, and other technical problems that are not mentioned may be clearly understood by those skilled in the art from the descriptions below.

### TECHNICAL SOLUTION

According to an embodiment disclosed in this document, a power management device includes a first control unit electrically connected to a battery pack, at least one second control unit electrically connected to the first control unit, and an end device electrically connected to the first control unit and the at least one second control unit and configured to control the battery pack.

According to an embodiment, the end device may be configured to receive power from the first control unit and receive a wake-up packet from the at least one second control unit.

According to an embodiment, the first control unit may be configured to supply power received from the battery pack to the at least one second control unit and the end device based on a Power over Data Line (PoDL), when receiving an ignition ON input for its own vehicle.

According to an embodiment, the first control unit may be configured to determine a magnitude of power to be supplied to a target device to be supplied with power based on at least one of a type, operating state, operating type, or any combination thereof of the target device.

According to an embodiment, the power supplied to the at least one second control unit may be greater than the power supplied to the end device.

According to an embodiment, the first control unit may be configured to monitor state information of the battery pack, identify a real-time state of the its own vehicle if it is determined that the battery pack corresponds to a designated state based on the state information, set priority for each of the end devices using the real-time state, and sequentially supply the power to the end devices according to the set priority.

According to an embodiment, the first control unit may be configured to determine that the battery pack corresponds to the designated state when a state of charge (SoC) of the battery pack is less than or equal to a designated value.

According to an embodiment, the first control unit may be configured to set a high priority to an infotainment device if it is identified that a driving speed of the its own vehicle is less than or equal to a designated value and that a user is onboard inside the its own vehicle based on the real-time state, and supply the power preferentially to the infotainment device among the end devices.

According to an embodiment, the at least one second control unit is configured to identify a designated end device corresponding to the designated event among the end devices if a designated event occurs, generate a wake-up packet in which a wake-up condition is set using at least one of a state of the its own vehicle, whether data is faulty, or any combination thereof, and transmit the wake-up packet to the designated end device based on Wake on LAN (WoL).

According to an embodiment, the designated end device may be configured to be woken up based on satisfying the wake-up condition.

According to an embodiment disclosed in this document, a vehicle including any one of the power management devices described above is provided.

According to an embodiment disclosed in this document, a power management method includes, when receiving an ignition ON input for an its own vehicle, suppling, by a first control unit, a first power and a second power to at least one second control unit and end device, respectively, using power received from the battery pack based on a Power over Data Line (PoDL), identifying, by the at least one second control unit, a designated end device corresponding to a designated event among end devices if a designated event occurs, generating a wake-up packet, and transmitting the wake-up packet to the designated end device, and causing the designated end device to be turned ON by power supplied from the first control unit and to be woken up based on receiving the wake-up packet.

According to an embodiment, the power management method may further include supplying, by the first control unit, first power and second power to the at least one second control unit and the end device, respectively, using power received from the battery pack based on Power over Data Line (PoDL), when receiving an ignition ON input for the its own vehicle.

According to an embodiment, the power management method may further include determining, by the first control unit, a magnitude of power to be supplied to a target device to be supplied with power based on at least one of a type, operating state, operating type, or any combination thereof of the target device.

According to an embodiment, the power management method may further include, by the first control unit, monitoring state information of the battery pack and identifying a real-time state of the its own vehicle if it is determined that the battery pack corresponds to a designated state based on the state information, setting, by the first control unit, the priority for each of the end devices using the real-time state, and sequentially supplying, by the first control unit, the power to the end devices according to the set priority.

According to an embodiment, the power management method may further include setting, by the first control unit, a high priority to an infotainment device if it is identified that a driving speed of the its own vehicle is less than or equal to a designated value and that a user is onboard inside the its own vehicle based on the real-time state, and supplying, by the first control unit, the power preferentially to the infotainment device among the end devices.

According to embodiments disclosed in this document, a vehicle including any one of the power management devices described above may be disclosed.

### ADVANTAGEOUS EFFECTS

The power management device and method according to the embodiments disclosed in this document can provide a more efficient and controllably intuitive power management method for a vehicle by separately implementing a data transmission path, a power transmission path, and a transmission subject by distinguishing them under an SDV structure.

In addition, a variety of effects can be provided that are identified directly or indirectly through this document.

### BRIEF DESCRIPTION OF THE DRAWINGS

FIG. 1 is a conceptual diagram showing a structure of a vehicle including a power management device according to an embodiment disclosed in this document.
FIG. 2 is a conceptual diagram showing a structure of a vehicle including a power management device according to an embodiment disclosed in this document.
FIG. 3 is a block diagram showing a configuration of a power management device according to an embodiment disclosed in this document.
FIG. 4 is a block diagram showing a configuration of a power management device according to an embodiment disclosed in this document.
FIG. 5 is a block diagram showing a configuration of a power management device according to an embodiment disclosed in this document.
FIG. 6 is a flowchart of a power management method according to an embodiment disclosed in this document.
FIG. 7 is a flowchart of a power management method according to an embodiment disclosed in this document.
FIG. 8 is a block diagram showing a hardware configuration of a computing system for performing an operating method of a power management device according to an embodiment disclosed in this document.

### MODE FOR CARRYING OUT THE INVENTION

Hereinafter, various embodiments of the present disclosure will be described with reference to the accompanying drawings. However, this is not intended to limit the present disclosure to a specific embodiment, but should be understood to include various modifications, equivalents, and/or alternatives of the embodiments of the present disclosure.

In this document, the singular form of a noun corresponding to an item may include one or more of said item, unless the relevant context clearly indicates otherwise. In this document, each of phrases "A or B", "at least one of A and B", "at least one of A or B", "A, B, or C", "at least one of A, B, and C", and "at least one of A, B, or C" may include any one of the items listed together in that phrase among the phrases, or all possible combinations thereof. Terms such as "first", "second", or "firstly" or "secondly" may be used merely to distinguish one component from another, and do not limit the components in any other respect (e.g., importance or order). When a component (e.g., a first component) is referred to as being "coupled" or "connected" to another component (e.g., a second component), with or without the terms "functionally" or "communicatively", it means that the component can be connected to the other component directly (e.g., in a wired manner), or wirelessly through a third component.

Each of the components described in this document (e.g., modules or programs) may contain a singular or multiple entities. According to various embodiments, one or more of the components among the components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

The term "module" or "... unit" used in this document may include a unit implemented in hardware, software or firmware, and may be used interchangeably with terms such as logic, logic blocks, parts, or circuits, for example. The module may be a part that is integrally formed or a minimum unit or portion of the part that performs one or more functions. For example, according to an embodiment, the module may be implemented in the form of an application-specific integrated circuit (ASIC).

Various embodiments of this document may be implemented as software (e.g., a program or an application) including one or more instructions stored in a machine readable storage medium (e.g., a memory). For example, a processor of the machine may call at least one instruction among the one or more instructions stored from the storage medium and execute the instruction. This enables the machine to operate to perform at least one function according to the at least one instruction called. The one or more instructions may include code generated by a compiler or code executable by an interpreter. The machine-readable storage medium may be provided in the form of a non-transitory storage medium. Here, 'non-transitory' means only that the storage medium is a tangible device and does not contain a signal (e.g., electromagnetic waves), and this term does not distinguish between a case where data is stored semi-permanently and a case where data is stored temporarily in the storage medium.

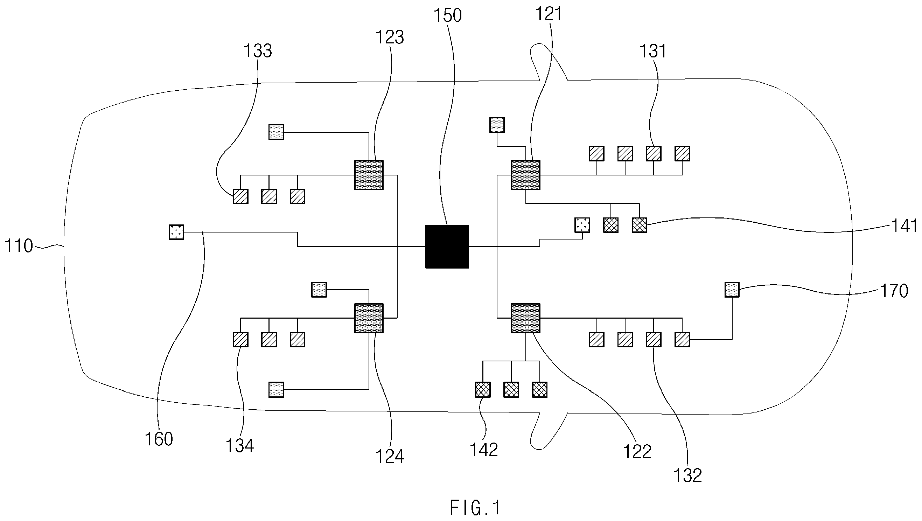

FIG. 1 is a conceptual diagram showing a structure of a vehicle including a power management device according to an embodiment disclosed in this document.

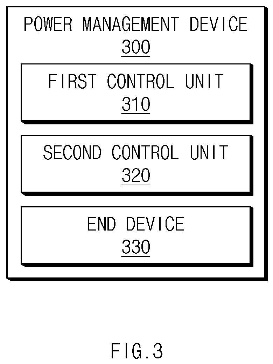

According to an embodiment, a power management device (e.g., a power management device 300 of FIG. 3) may include at least some of components included in a vehicle 110 according to the SDV architecture. The power management device may, for example, manage power and/or data transmitted and received between the components of the vehicle 110.

For example, the vehicle 110 may include at least one of a first zone controller 121, a second zone controller 122, a third zone controller 123, a fourth zone controller 124, a first end device 131, a second end device 132, a third end device 133, a fourth end device 134, a first actuator 141, a second actuator 142, a high performance computer (HPC) 150, a transmission and reception path 160, an additional element 170, or any combination thereof. The power management device for power management of the vehicle 110 may include at least some of the components included in the vehicle 110.

For example, the components according to the SDV architecture may include a hierarchical structure in the order of the HPC 150, the zone controllers, and the end devices.

As an example, the HPC 150 may be connected to the first zone controller 121, the second zone controller 122, the third zone controller 123, and the fourth zone controller 124, and may transmit and receive various types of data to and from each zone controller.

As an example, the first zone controller 121, the second zone controller 122, the third zone controller 123, and the fourth zone controller 124 may control the first end device 131, the second end device 132, the third end device 133, and the fourth end device 134, respectively. The end device may include, for example, at least one of a sensor for controlling the vehicle 110, a battery (or BMS) for driving the vehicle 110, or any combination thereof. For example, when one of the second end devices 132 is the BMS, the additional element 170 may be defined as a battery pack.

As an example, the first zone controller 121 and the second zone controller 122 may control the first actuator 141 and the second actuator 142, respectively. The actuator may include, for example, at least one driving device for driving the vehicle 110.

For example, the components described above may perform communication based on a designated path (e.g., a transmission and reception path 160) through automotive Ethernet.

The power management device according to an embodiment of this document may control and manage a communication process of power and/or data transmitted and received between the components described above.

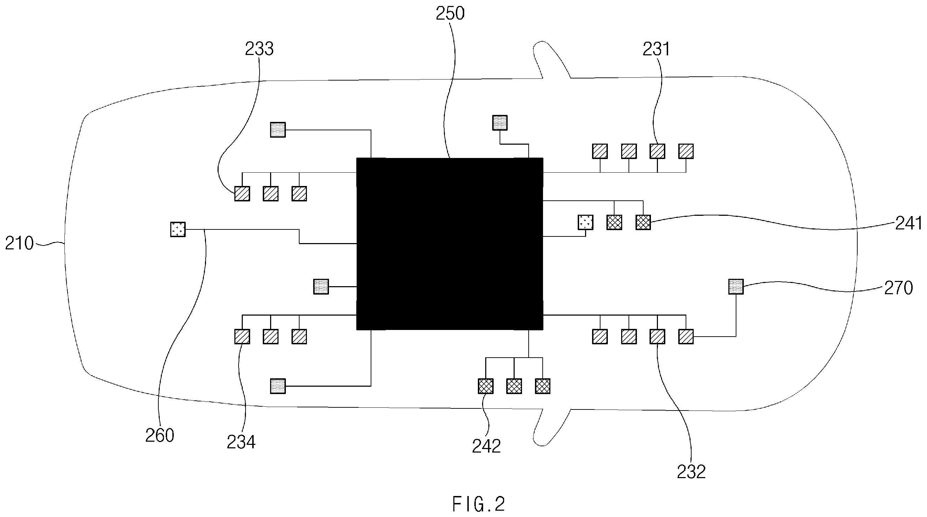

FIG. 2 is a conceptual diagram illustrating a structure of a vehicle including a power management device according to an embodiment disclosed in this document.

In FIG. 2, the description of the components defined with the same names as in FIG. 1 may be replaced with the description of FIG. 1 described above.

For example, an its own vehicle 210 may include at least one of a first end device 231, a second end device 232, a third end device 233, a fourth end device 234, a first actuator 241, a second actuator 242, a high performance computer (HPC) 250, a transmission and reception path 260, an additional element 270, or any combination thereof. A power management device for managing power of the its own vehicle 210 may include at least some of the components included in the its own vehicle 210.

For example, the its own vehicle 210 according to FIG. 2 does not include a zone controller as compared to FIG. 1. That is, even if the SDV architecture is adopted, the its own vehicle 210 may be implemented with a structure in which the HPC 250 directly controls at least one end device as in FIG. 2.

FIG. 3 is a block diagram showing a configuration of a power management device according to an embodiment disclosed in this document.

Referring to FIG. 3, a power management device 300 may include a first control unit 310, a second control unit 320, and an end device 330.

According to an embodiment, the power management device 300 may perform management of power and/or data between components for controlling an its own vehicle. For example, the its own vehicle may be operated by components according to the SDV architecture. For example, the SDV may include a hierarchical structure in the order of high performance computer (HPC), zone, end device, and sensor/actuator. In this case, a vehicle according to the SDV may be divided into a plurality of zones, and each zone may include a control unit (e.g., a zone controller) for controlling components of a lower layer included in the zone. The control unit of the zone is electrically connected to the HPC and may transmit and receive various signals. The above-described contents are exemplary, and the embodiments of the present invention are not limited thereto. For example, according to another embodiment according to the SDV architecture (e.g., an embodiment of the SDV architecture according to FIG. 2), the HPC and the end device are operatively connected to each other, and the zone may be omitted.

The power management device 300 may transmit and receive at least one of power, data (e.g., wake-up packet), control signal, or any combination thereof with respect to components included in an electronic apparatus. In an embodiment, the electronic apparatus may be a mobile device (e.g., a mobile phone, a laptop computer, a smart phone, a smart pad), an electric vehicle (e.g., an electric vehicle (EV), a hybrid EV (HEV), a plug-in HEV (PHEV), and a fuel cell EV (FCEV)), an energy storage system (ESS), or a battery swapping system (BSS). In an embodiment, the electronic apparatus may include a vehicle (e.g., an electric vehicle, a hybrid vehicle, etc.) and a moving object driven based on electric energy. In other words, for example, the power management device 300 may be included in the vehicle and configured to manage for operation of the vehicle.

The operation of the power management device 300 described below may be performed by a battery management system (BMS) in the vehicle, a battery BMS provided in a battery pack, and may be performed in various devices such as servers, clouds, chargers, or chargers/dischargers.

According to an embodiment, the first control unit 310 and the second control unit 320 may include one or more processors corresponding to the first zone and the second zone of the its own vehicle, respectively. The second control unit 320 may include, for example, one or more control units. In other words, at least one second control unit 320 may include at least one control unit corresponding to an n-th zone. The first control unit 310 and the at least one second control unit 320 may be electrically connected to each other. The first control unit 310 and the at least one second control unit 320 may be electrically connected to the end device 330 provided for controlling a battery pack included in the its own vehicle, for example. The end device 330 and the battery pack may also be implemented as one module (e.g., a battery management system (BMS)).

For example, each processor included in the first control unit 310 and the second control unit 320 may include a central processing unit, an application processor, a graphic processing unit, a neural processing unit (NPU), an image signal processor, a sensor hub processor, or a communication processor.

The functions and operations of the power management device 300 described below may be performed by one processor (or, the first control unit 310 and/or the second control unit 320), or the functions may be separated at least in part and performed by a plurality of processors.

According to an embodiment, a zone corresponding to the first control unit 310 may be defined as a power zone. The power zone may include, for example, a controller (e.g., the first control unit 310) for power management of components within the vehicle. The first control unit 310 corresponding to the power zone may transmit and receive power and/or data to and from the end device 330 and at least one second control unit 320, for example, based on Power over Data Line (PoDL) (or through PoDL).

According to an embodiment, a zone corresponding to at least one second control unit 320 may be defined as a general zone. The general zone may include, for example, a controller (e.g., at least one second control unit 320) for control and management of components of the its own vehicle (e.g., sensors, actuators, cameras, driving and braking devices, etc.) included in the zone. At least one second control unit 320 corresponding to the general zone may transmit and receive power and/or data to and from the end device 330 and the at least one second control unit 320 based on Wake on LAN (WoL) (or through WoL).

According to an embodiment, the end device 330 may receive power from the first control unit 310 based on PoDL and may receive a data packet (e.g., a wake-up packet) from at least one second control unit 320 based on WoL. The end device 330 may include, for example, at least one of at least one interface electrically connected to the first control unit 310 and the second control unit 320, a determination unit, an MCU, a memory, or any combination thereof.

According to an embodiment, the first control unit 310 may supply power to peripheral devices based on PoDL. For example, when an ignition ON input for the its own vehicle is received (or when it is identified that the its own vehicle is turned ON), the first control unit 310 may supply power to peripheral devices based on PoDL.

For example, when the first control unit 310 receives power from a battery pack connected to the end device 330, the first control unit 310 may supply at least a portion of the received power to peripheral devices based on PoDL.

For example, the first control unit 310 may determine a magnitude (or class) of the power to be supplied to a target device to be supplied with power based on at least one of a type, operating state, operating type, or any combination thereof of the target device.

As an example, if the target device is identified as being connected to a sensor and performing a role of controlling the sensor (e.g., if the target device is an end device for the sensor), the first control unit 310 may supply power of a relatively low magnitude (or a low class) to the target device.

As an example, if the target device is identified as controlling at least one end device of a lower layer or performing a role of collecting and processing data (e.g., when the target device is at least one second control unit, another zone controller, or a high-performance computer), the first control unit 310 may supply power of a relatively large magnitude (or a high class) to the target device.

As an example, the first control unit 310 may supply first power and second power to the at least one second control unit 320 and the end device 330, respectively, using power received from the battery pack. The first power supplied to the at least one second control unit 320 may be, for example, greater than the second power supplied to the end device 330.

For example, the first control unit 310 may set a priority of power supply based on state information of the battery pack and sequentially supply power.

As an example, the first control unit 310 may monitor the state information of the battery pack and determine whether the battery pack corresponds to a designated state based on the state information. The first control unit 310 may determine that the battery pack corresponds to the designated state, for example, when the state of charge (SoC) of the battery pack is less than or equal to a designated value.

For example, if it is determined that the battery pack corresponds to a designated state, the first control unit 310 may identify a real-time state of the its own vehicle. The first control unit 310 may set the priority of power supply for each of the end devices 330 using the real-time state, for example. The first control unit 310 may sequentially supply power to the end devices 330 according to the set priority, for example.

As an example, the first control unit 310 may identify that a driving speed of the its own vehicle is less than or equal to a designated value and that a user is onboard inside the its own vehicle, based on the real-time state. In this case, the first control unit 310 may set a high priority to an infotainment device (e.g., a display, a voice output device, etc.) among the end devices 330 and supply power preferentially thereto.

For example, if a designated event occurs, the second control unit 320 may identify a designated end device corresponding to the designated event among the end devices 330.

As an example, when it is identified that the vehicle has started driving, the second control unit 320 may identify a device for driving control (e.g., a driving unit, a braking unit, a steering unit, etc.) among the end devices 330 as a designated end device.

As an example, if it is identified that the its own vehicle has started charging, the second control unit 320 may identify a device for charging control (e.g., a BMS, a battery pack, etc.) among the end devices 330 as a designated end device.

For example, the second control unit 320 may generate a wake-up packet in which a wake-up condition is set by using at least one of a state of the its own vehicle, whether data is faulty, or any combination thereof, and then transmit the generated wake-up packet to the designated end device.

For example, the second control unit 320 and the end device 330 may include a memory, a logic module, and/or an MCU. The end device 330 may receive, for example, the wake-up packet from the second control unit 320 and the like.

According to an embodiment, the end device 330, using at least one interface, may receive power from the first control unit 310 or transmit and receive data to and from the first control unit 310 and the second control unit 320.

For example, the end device 330 may receive power from the first control unit 310 using a first interface. For example, the end device 330 may receive data from at least one second control unit 320 using a second interface that is distinct from the first interface.

For example, the data received from the second control unit 320 may include a wake-up packet that instructs a wake-up operation of the end device 330.

According to an embodiment, the end device 330 may receive the wake-up packet in which the wake-up condition is set from the second control unit 320. For example, at least one second control unit may set a wake-up condition related to at least one of the state of the its own vehicle, the data accuracy of the end device, or any combination thereof in the wake-up packet and then transmit the wake-up packet to the end device 330.

For example, the end device 330 may determine whether the wake-up condition set for the wake-up packet is satisfied using the determination unit. The determination unit may include, for example, at least one logic module. The end device 330 may transmit the wake-up signal to the MCU through the determination unit if, for example, it is determined that the wake-up condition is satisfied. The MCU may be woken up, for example, based on receiving the wake-up signal. As the MCU is woken up, the end device 330 may also be woken up.

As an example, if the end device 330 identifies that the ignition of the vehicle is in an ON state, the end device 330 may determine that the wake-up condition is satisfied and transmit the wake-up signal to the MCU through the determination unit.

As an example, if the end device 330 identifies that the ignition of the vehicle is in an OFF state, the end device 330 may transmit a wake-up signal to the MCU based on a designated cycle so that the end device 330 is woken up based on the designated cycle. Through this, the power management device 300 may prevent a situation in which the end device 330 is unnecessarily continuously woken up when the ignition of the vehicle is in an OFF state, and may perform power control stably and efficiently by waking up the end device 330 at designated cycles.

As an example, if the end device 330 identifies that the data accuracy of the end device 330 is less than or equal to a designated value, the end device 330 may determine that the wake-up condition is satisfied and transmit a wake-up signal to the MCU through the determination unit. The end device 330 may determine that the accuracy is less than or equal to the designated value, for example, if there is a fault in the data stored in the memory before receiving the wake-up packet. Through this, the end device 330 may perform a wake-up in a situation where the data accuracy is low or there is a fault in the previously stored data, thereby quickly preventing problems caused by data errors.

As an example, if the end device 330 determines that the end device 330 should maintain a wake-up state, the end device 330 may transmit a designated signal to the determination unit through the MCU. The designated signal may include, for example, a request for transmission of the wake-up signal. The determination unit may transmit the wake-up signal to the MCU regardless of whether a wake-up packet is received or whether a wake-up condition is satisfied, based on receiving the designated signal from the MCU. In other words, if a situation in which the wake-up state should be continuously maintained is identified, the determination unit may unconditionally transmit the wake-up signal to the MCU by the designated signal transmitted by the MCU to the determination unit, regardless of whether other conditions are satisfied.

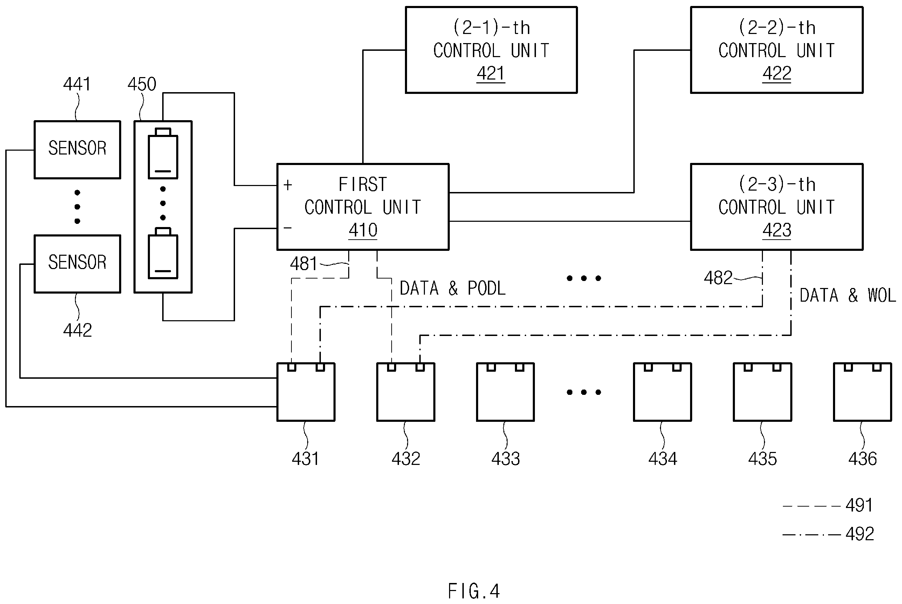

FIG. 4 is a conceptual diagram showing the configuration of a power management device according to an embodiment disclosed in this document.

According to an embodiment, a power management device (e.g., a power management device 300 of FIG. 3) may include a first control unit 410, at least one second control unit (e.g., a (2-1)-th control unit 421, a (2-2)-th control unit 422, and a (2-3)-th control unit 423), at least one end device 431, 432, 433, 434, 435, and 436, at least one sensor 441 and 442, and a battery pack 450. For example, components included in the power management device may transmit and receive power and/or data based on a first path 491 or a second path 492. The first path 491 and the second path 492 may mean electrical paths through which power and/or data are transmitted and received according to a communication protocol based on PoDL and WoL, respectively. The first path 491 may include a 1-1 path 481, and the second path 492 may include a 2-1 path 482.

For example, the first control unit 410 may supply power or transmit data to a designated end device 431 through the 1-1 path 481.

For example, the at least one second control unit (e.g., the (2-1)-th control unit 421, the (2-2)-th control unit 422, and the (2-3)-th control unit 423) and the at least one end device 431, 432, 433, 434, 435, and 436 may transmit and receive data through the second path 492. As an example, the (2-3)-th control unit 423 may transmit data (e.g., a wake-up packet) to the designated end device 431 through the 2-1 path 482).

For example, the designated end device 431 may include a control device for controlling the battery pack 450 included in the its own vehicle. The designated end device 431 may obtain various information (e.g., temperature, SoH, SoC, operation history, etc.) about the battery pack 450 by using, for example, the at least one sensor 441 and 442.

For example, the first control unit 410 may monitor state information of the battery pack 450. If the first control unit 410 determines that the battery pack 450 corresponds to a designated state (e.g., a state where the SoC is less than or equal to a designated value) based on the state information, the first control unit 410 may identify a real-time state of the its own vehicle. The first control unit 410 may set a priority for each of the at least one end device 431, 432, 433, 434, 435, and 436 using the real-time state, and sequentially supply power to the at least one end device 431, 432, 433, 434, 435, and 436 according to the set priority.

For example, when an ignition ON input for the its own vehicle is received, the first control unit 410 may supply power to the at least one second control unit 421, 422, and 423 and/or the at least one end device 431, 432, 433, 434, 435, and 436. The control unit 410 may determine the magnitude of power to be supplied to a target device to be supplied with power based on at least one of a type, operating status, operating type, or any combination thereof of the target device. As an example, the magnitude of power supplied to the at least one second control unit 421, 422, and 423 may be greater than the magnitude of power transmitted to the at least one end device 431, 432, 433, 434, 435, and 436.

For example, the first control unit 410 may supply power to a designated end device 431 for controlling the battery pack 450. The first control unit 410 may supply power to the designated end device 431 through, for example, the 1-1 path 481 based on Power over Data Line (PoDL).

For example, if a designated event occurs, the (2-3)-th control unit 423 may identify an end device corresponding to the designated event among the at least one end device 431, 432, 433, 434, 435, and 436. When the designated event is an event related to the battery pack 450, the (2-3)-th control unit 423 may identify the designated end device 431 and transmit a wake-up packet through the 2-1 path 482.

For example, the (2-3)-th control unit 423 may generate a wake-up packet in which a wake-up condition is set by using at least one of the state of the vehicle, whether data is faulty, or any combination thereof, and transmit the wake-up packet to the designated end device 431 through the 2-1 path 482 based on Wake on LAN (WoL). The designated end device 431 may be woken up when the wake-up condition is satisfied.

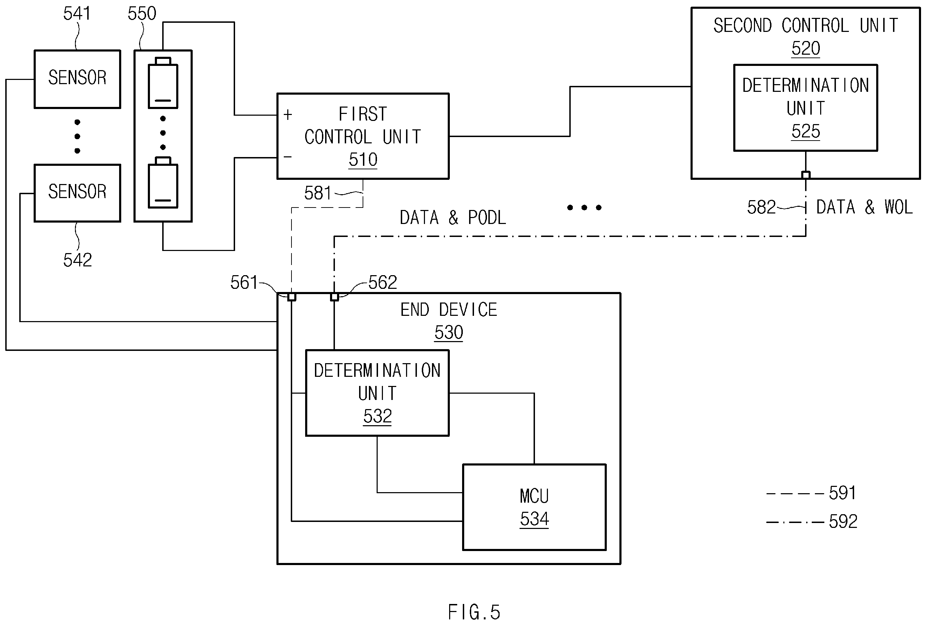

FIG. 5 is a conceptual diagram showing the configuration of a power management device according to an embodiment disclosed in this document.

According to an embodiment, a power management device (e.g., the power management device 300 of FIG. 3) may include a first control unit 510 (e.g., the first control unit 310 of FIG. 3), a second control unit 520 (e.g., the second control unit 320 of FIG. 3), an end device 530 (e.g., the end device 330 of FIG. 1), at least one sensor 541 and 542, and a battery pack 550. For example, components included in the power management device may transmit and receive power and/or data based on a first path 591 or a second path 592. The first path 591 and the second path 592 may mean electrical paths through which power and/or data are transmitted and received by a communication protocol based on PoDL and WoL, respectively. The first path 591 may include a 1-1 path 581, and the second path 592 may include a 2-1 path 582.

For example, the first control unit 510 may supply power or transmit data to the end device 330 through the first-1 path 581.

For example, the second control unit 520 and the end device 530 may transmit and receive data through the second path 392. As an example, the second control unit 520 may transmit data (e.g., a wake-up packet) to the end device 530 through the second-1 path 382. The second control unit 520 may generate a wake-up condition included in the wake-up packet, for example, by using a determination unit 525.

For example, the end device 530 may include a control device for controlling the battery pack 550 included in the its own vehicle. The end device 530 may obtain various information (e.g., temperature, SoH, SoC, operation history, etc.) related to the battery pack 550 using at least one sensor 541 and 542, for example.

For example, the end device 530 may receive power from the first control unit 510 using a first interface 561 and receive data from the second control unit 520 using a second interface 562 that is distinct from the first interface 561. The received data may include a wake-up packet that instructs a wake-up operation of the end device 530. The end device 530 may transmit the power supplied through the first interface 561 to a determination unit 532 and an MCU 534.

For example, the second control unit 520 may set a wake-up condition related to at least one of the state of the vehicle, the data accuracy of the end device 530 for the wake-up packet, or any combination thereof. The second control unit 520 may transmit the wake-up packet to the end device 530 through the 2-1 path 582 based on Wake on LAN (WoL). The end device 530, for example, may perform a wake-up operation only when it is determined that the wake-up condition is satisfied upon receiving the wake-up packet.

For example, the end device 530 may include the determination unit 532 and the MCU 534. The end device 530 may, for example, determine whether a wake-up condition set for a wake-up packet is satisfied using the determination unit 532.

As an example, if it is identified that the engine of the vehicle is in an ON state, the end device 530 may determine that the wake-up condition is satisfied and transmit the wake-up signal to the MCU 534 through the determination unit 532.

As an example, if it is identified that the data accuracy of the end device 530 is less than or equal to a designated value, the end device 530 may determine that the wake-up condition is satisfied and transmit the wake-up signal to the MCU 534 through the determination unit 532. The end device 530 may determine that the wake-up condition is satisfied, for example, if there is a fault in the data previously stored in the memory (not shown) before receiving the wake-up packet or the accuracy is less than or equal to a designated value. Accordingly, the wake-up signal may be transmitted to the MCU 534 for the wake-up operation.

As an example, if it is identified that the engine of the vehicle is in the OFF state, the end device 530 may transmit the wake-up signal to the MCU 534 based on a designated cycle so that the end device 530 is woken up based on the specified cycle.

As an example, if it is determined that the end device 530 should continuously maintain a wake-up state, the MCU 534 may transmit a designated signal to the determination unit 532. As an example, the MCU 534 may determine a case in which the ignition of its own vehicle is in an ON state, a case in which own vehicle is driving, etc. as a situation in which the end device 530 should continuously maintain a wake-up state. The determination unit 532 may transmit the wake-up signal to the MCU 534 regardless of whether the wake-up packet is received or whether the wake-up condition is satisfied, based on receiving a designated signal from the MCU 534.

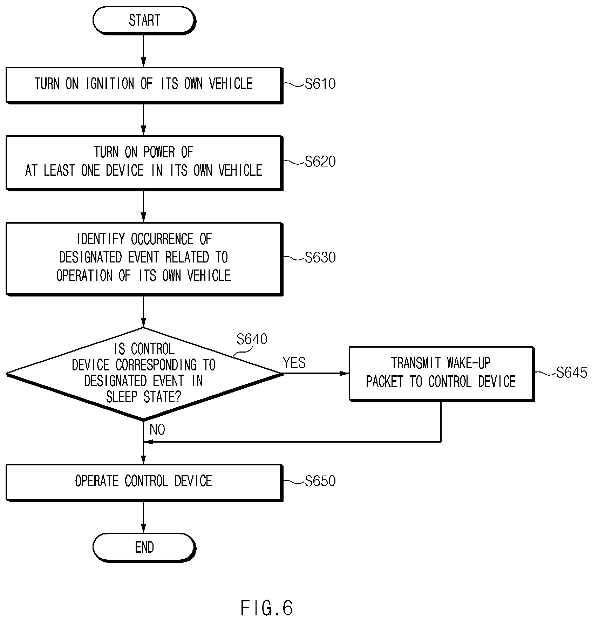

FIG. 6 is a flowchart of a power management method according to an embodiment disclosed in this document.

According to an embodiment, the power management device (e.g., the power management device 300 of FIG. 3) may perform the operations disclosed in FIG. 6. For example, at least some of the components (e.g., the first control unit 310, the second control unit 320, and the end device 530 of FIG. 3) included in the power management device may be set to perform the operations of FIG. 6.

In the following embodiment, operations of S610 to S650 may be performed sequentially, but are not necessarily performed sequentially. For example, the order of each operation may be changed, and at least two operations may be performed in parallel. In addition, contents corresponding to or overlapping with the contents described above in relation to FIG. 6 may be briefly described or omitted.

Referring to FIG. 6, the power management method may include turning ON the ignition of an its own vehicle (S610), turning ON the power of at least one device in the its own vehicle (S620), identifying an occurrence of a designated event related to an operation of the its own vehicle (S630), determining whether a control device corresponding to the designated event is in a sleep state (S640), transmitting a wake-up packet to the control device if the control device is in the sleep state (S645), and operating the control device if the control device is not in the sleep state (or, if the control device is in a wake-up state) (S650).

In step S610, the power management device may turn ON the ignition of the its own vehicle. For example, if the power management device receives an ignition ON input (e.g., a button input) for the its own vehicle, the power management device may turn ON the ignition of the its own vehicle.

In step S620, the power management device may turn ON the power of at least one device in the its own vehicle. At least one device may, for example, first enter the sleep state from an OFF state when power is turned ON. The sleep state may be defined as, for example, a state in which the power is in an ON state but has not yet been woken up and is being driven by a minimum power.

In step S630, the power management device may identify the occurrence of a designated event related to the operation of the its own vehicle. The power management device may identify, for example, a control device (e.g., an end device for controlling a battery pack) corresponding to the designated event among the at least one device.

In step S640, the power management device may determine whether the control device corresponding to the designated event is in a sleep state.

In step S645, the power management device may control the control device to be woken up from the sleep state and start operating by transmitting a wake-up packet to the control device using the zone controller (e.g., the second control unit 320 of FIG. 3).

In step S650, the power management device may operate the control device.

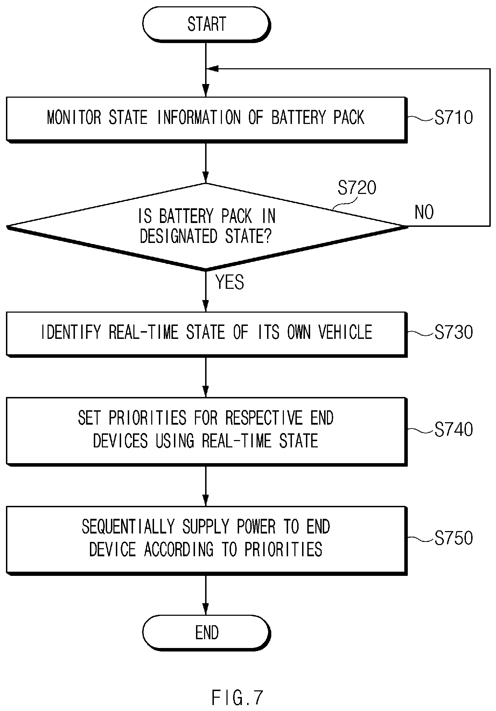

FIG. 7 is a flowchart of a power management method according to an embodiment disclosed in this document.

According to an embodiment, the power management device (e.g., the power management device 300 of FIG. 3) may perform the operations disclosed in FIG. 7. For example, at least some of the components included in the power management device (e.g., the first control unit 310, the second control unit 320, and the end device 330 of FIG. 3) may be set to perform the operations of FIG. 7.

In the following embodiment, operations of S710 to S750 may be performed sequentially, but are not necessarily performed sequentially. For example, the order of each operation may be changed, and at least two operations may be performed in parallel. In addition, contents corresponding to or overlapping with the contents described above in relation to FIG. 5 may be briefly described or omitted.

Referring to FIG. 7, the power management method may include monitoring state information of a battery pack (S710), determining whether the battery pack is in a designated state (S720), identifying a real-time state of an its own vehicle (S730), setting priorities for respective end devices using a real-time state (S740), and sequentially supplying power to the end devices according to the priorities (S750).

In step S710, the power management device may continuously monitor state information of the battery pack using at least some of information obtained using at least one sensor and/or information received by the battery pack through the communication unit.

In step S720, the power management device may determine whether the battery pack is in a designated state based on the state information. The designated state may include, for example, a low voltage state, a state where SoC and/or SoH are less than or equal to a designated value, etc.

In step S730, the power management device may identify a real-time state of the its own vehicle, including an internal state, a driving situation, a passenger status, the passenger's body information, movement, etc. of an its own vehicle.

In step S740, the power management device may set priorities for respective end devices using the real-time state. For example, if the driving speed of the its own vehicle is less than or equal to a designated value and a user is onboard inside the vehicle, the power management device may set a high priority to an infotainment device for the convenience of the user.

In step S750, the power management device may first supply power to the end device having the high priority. As an example, after step S740, the power management device may preferentially supply power to the infotainment device among the end devices.

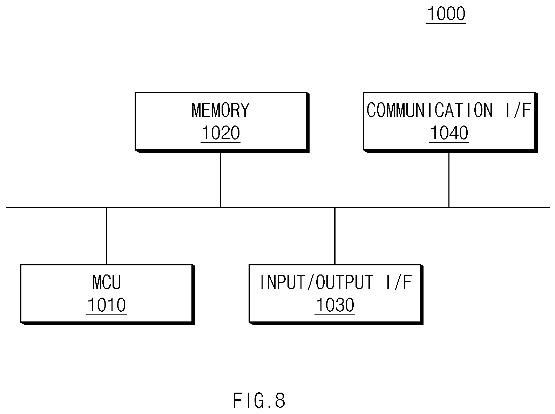

FIG. 8 is a block diagram showing a hardware configuration of a computing system for performing an operating method of a power management device according to an embodiment disclosed in this document.

Referring to FIG. 8, a computing system 3000 according to an embodiment disclosed in this document may include an MCU 1010, a memory 1020, an input/output I/F 1030, and a communication I/F 1040.

The MCU 1010 may be a processor that executes various programs stored in the memory 1020, processes various information including battery data, etc. through these programs, and performs the functions of the processor (or the control unit) included in the power management device shown in FIG. 3 described above.

The memory 1020 may store various programs for performing functions of the power management device. In addition, the memory 1020 may store various types of information including battery data (voltage data, capacity data, etc.), differential capacity data, etc., and may include a constructed database.

A plurality of such memories 1020 may be provided as needed. The memory 1020 may be a volatile memory or a nonvolatile memory. The memory 1020 used as the volatile memory may be RAM, DRAM, SRAM, etc. The memory 1020 used as the nonvolatile memory may be ROM, PROM, EAROM, EPROM, EEPROM, flash memory, etc. The examples of the memories 1020 listed above are only examples and are not limited to these examples.

The input/output I/F 1030 may provide an interface that allows data to be transmitted and received by connecting an input device (not shown) such as a keyboard, mouse, or touch panel and an output device (not shown) such as a display with the MCU 1010.

The communication I/F 940 is a configuration that can transmit and receive various data with the server, and may be various devices that can support wired or wireless communication. For example, the power management device may transmit and receive various information including battery data, etc. to and from a separately provided external server through the communication I/F 1040.

In this way, the computer program according to an embodiment disclosed in this document may be implemented as a module that performs, for example, each function shown in FIG. 1, by being recorded in the memory 1020 and processed by the MCU 1010.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical ideas disclosed in this document, and those skilled in the art to which the embodiments disclosed in this document belong may make various modifications and variations without departing from the essential characteristics of the embodiments disclosed in this document. Accordingly, the embodiments disclosed in this document are intended to illustrate rather than limit the technical ideas of the embodiments disclosed in this document, and the scope of the technical ideas disclosed in this document is not limited by these embodiments. The scope of protection of the technical ideas disclosed in this document should be interpreted by the scope of the claims below, and all technical ideas within the equivalent scope thereof should be interpreted as being included in the scope of rights of this document.

## Claims

1. A power management device comprising:
a first control unit electrically connected to a battery pack;
at least one second control unit electrically connected to the first control unit; and
an end device electrically connected to the first control unit and the at least one second control unit and configured to control the battery pack,
wherein the end device is configured to receive power from the first control unit and receive a wake-up packet from the at least one second control unit.

2. The power management device of claim 1, wherein the first control unit is configured to supply a first power and a second power to the at least one second control unit and the end device, respectively, using power received from the battery pack based on a Power over Data Line (PoDL), when receiving an ignition ON input for its own vehicle.

3. The power management device of claim 2, wherein the first control unit is configured to determine a magnitude of power to be supplied to a target device to be supplied with power based on at least one of a type, operating state, operating type, or any combination thereof of the target device.

4. The power management device of claim 2, wherein the first power supplied to the at least one second control unit is greater than the second power supplied to the end device.

5. The power management device of claim 1, wherein the first control unit is configured to:
monitor state information of the battery pack;
identify a real-time state of its own vehicle if it is determined that the battery pack corresponds to a designated state based on the state information;
set priority for each of the end devices using the real-time state; and
sequentially supply the power to the end devices according to the set priority.

6. The power management device of claim 5, wherein the first control unit is configured to determine that the battery pack corresponds to the designated state when a state of charge (SoC) of the battery pack is less than or equal to a designated value.

7. The power management device of claim 5, wherein the first control unit is configured to:
set a high priority to an infotainment device if it is identified that a driving speed of the its own vehicle is less than or equal to a designated value and that a user is onboard inside the its own vehicle based on the real-time state; and
supply the power preferentially to the infotainment device among the end devices.

8. The power management device of claim 1, wherein the at least one second control unit is configured to:
identify a designated end device corresponding to the designated event among the end devices if a designated event occurs; and
generate a wake-up packet in which a wake-up condition is set using at least one of a state of the its own vehicle, whether data is faulty, or any combination thereof and transmit the wake-up packet to the designated end device based on Wake on LAN (WoL), and
the designated end device is configured to be woken up based on satisfying the wake-up condition.

9. A vehicle comprising the power management device according to any one of claims 1 to 8.

10. A power management method comprising:
when receiving an ignition ON input for an its own vehicle, suppling, by a first control unit, a first power and a second power to at least one second control unit and the end device, respectively, using power received from the battery pack based on a Power over Data Line (PoDL);
identifying, by the at least one second control unit, a designated end device corresponding to a designated event among end devices if a designated event occurs, generating a wake-up packet, and transmitting the wake-up packet to the designated end device; and
causing the designated end device to be turned ON by power supplied from the first control unit and to be woken up based on receiving the wake-up packet.

11. The power management method of claim 10, further comprising:
supplying, by the first control unit, first power and second power to the at least one second control unit and the end device, respectively, using power received from the battery pack based on Power over Data Line (PoDL), when receiving an ignition ON input for the its own vehicle.

12. The power management method of claim 11, further comprising:
determining, by the first control unit, a magnitude of power to be supplied to a target device to be supplied with power based on at least one of a type, operating state, operating type, or any combination thereof of the target device.

13. The power management method of claim 10, further comprising:
by the first control unit, monitoring state information of the battery pack and identifying a real-time state of the its own vehicle if it is determined that the battery pack corresponds to a designated state based on the state information;
setting, by the first control unit, the priority for each of the end devices using the real-time state; and
sequentially supplying, by the first control unit, the power to the end devices according to the set priority.

14. The power management method of claim 13, further comprising:
setting, by the first control unit, a high priority to an infotainment device if it is identified that a driving speed of the its own vehicle is less than or equal to a designated value and that a user is onboard inside the its own vehicle based on the real-time state; and
supplying, by the first control unit, the power preferentially to the infotainment device among the end devices.
